# EUROPEAN PATENT APPLICATION

(11) **EP 1 775 162 A1**
(43) Date of publication of application: **18.04.2007**
(21) Application number: 05022288.4
(22) Date of filing: 12.10.2005
(51) Int. Cl.: B60Q 1/32

(54) **Lighting and alerting device for vehicles**

(71) Applicant: Guu Yih Plastics Co., Ltd., Rende Township, Tainan County, Taiwan, R.O.C. (TW)
(72) Inventor: Wang, Hung-Sheng, Jungjeng Rd., Rende Shiang, Tainan (TW)
(74) Representative: Kador & Partner

(57) **Abstract**

A car (2) has a lighting and alerting device (1) secured on a semicircular edge (21) of each fender thereof for giving signals and making the car (2) get noticed easily; each lighting and alerting device (1) includes a shining mechanism (11), and a fixing member (12); each shining mechanism (11) includes a front cover part (111), a rear cover part (112) joined to the front cover part, and a light producing member (113) held in the front and the rear cover parts (111,112); at least one of the front and the rear cover parts (111,112) of each lighting and alerting device (1) is pervious to light; the fixing members (12) are joined to the shining mechanisms (11), and secured on respective ones of inner portions of semicircular edges (21) of the car fenders.

## Description

### BACKGROUND OF THE INVENTION

### 1. Field of the invention

The present invention relates to a car lighting and alerting device, more particularly one, which is secured on a semicircular edge of a fender of a car, and will start shining as soon as a certain one of other kinds of lights of the car are turned on.

### 2. Brief Description of the Prior Art

More and more people afford a car with decrease in the price of cars. Therefore, the number of cars on the road increases, and traffic safety maintenance becomes an important issue.

Cars have alerting systems for giving signals and making other people easily notice. A conventional car alerting system includes horns, headlights, taillights, back-up lights, brake lights, parking lights, and blinkers; the horns are sounded to alert other people; the headlights and the taillights are used in the night, and the headlights can produce far-reaching beams instead for allowing the drivers for see more clearly and farther in the night. And, the drivers can make far-reaching beam of light on and off repeatedly for alerting other people. The blinkers are used to tell other people the direction the drivers want to turn.

However, currently existing cars don't have lights on the left or the right sides thereof for giving signals to people walking or diving next to the left and the right sides or making them notice. Consequently, accident is likely to happen when drivers make a right or left turn.

### SUMMARY OF THE INVENTION

It is a main object of the invention to provide a car lighting and alerting device to overcome the above-mentioned problems. The lighting and alerting device is secured on a semicircular edge of a fender of a car. Each lighting and alerting device includes a shining mechanism, and a fixing member; the shining mechanism includes a front cover part, a rear cover part joined to the front cover part, and a light producing member held in the front and the rear cover parts; at least one of the front and the rear cover parts is pervious to light; the fixing member is joined to the shining mechanism, and secured on an inner portion of semicircular edge of the corresponding fender. The shining mechanism will start shining to give signals and make the car get noticed easily as soon as a certain one of other kinds of lights of the car are turned on.

### BRIEF DESCRIPTION OF THE DRAWINGS

The present invention will be better understood by referring to the accompanying drawings, wherein:
Fig. 1 is a perspective view of a car with the lighting and alerting devices according to the present invention,
Fig. 2 is a rear view of a car with the lighting and alerting devices,
Fig. 3 is an exploded perspective view of the present invention,
Fig. 4 is sectional view of the lighting and alerting device, and
Fig. 5 is a view showing the use of the car lighting and alerting device.

### DETAILED DESCRIPTION OF THE PREFERRED EMBODIMENTS

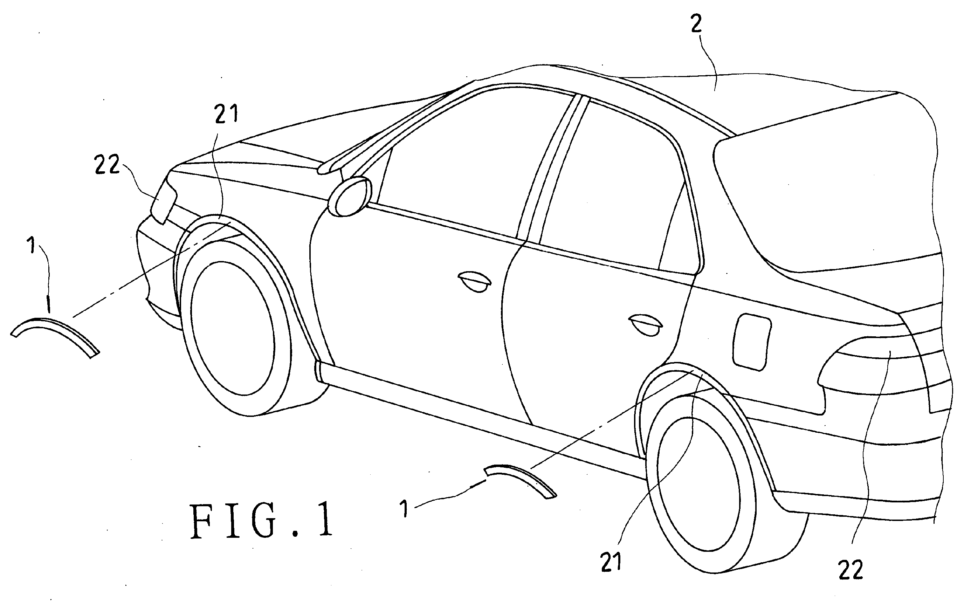

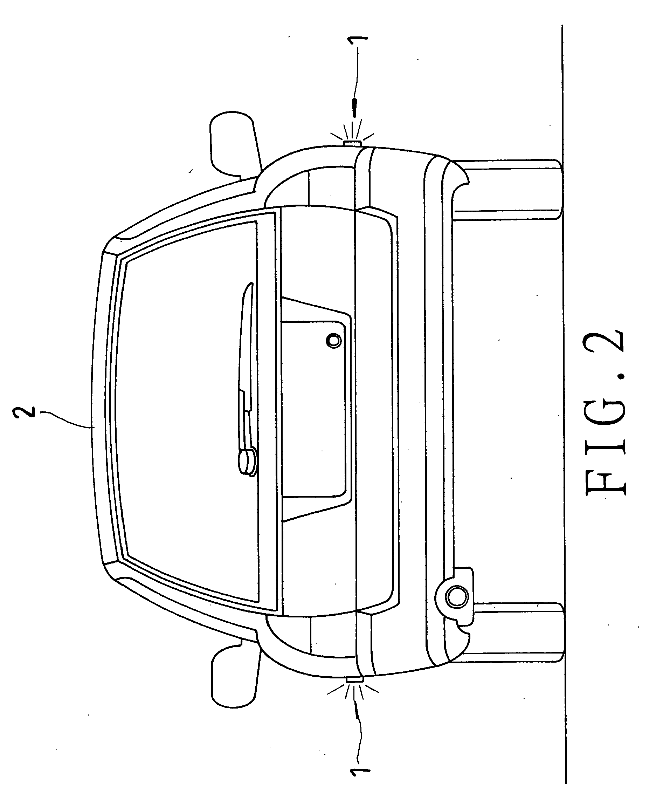

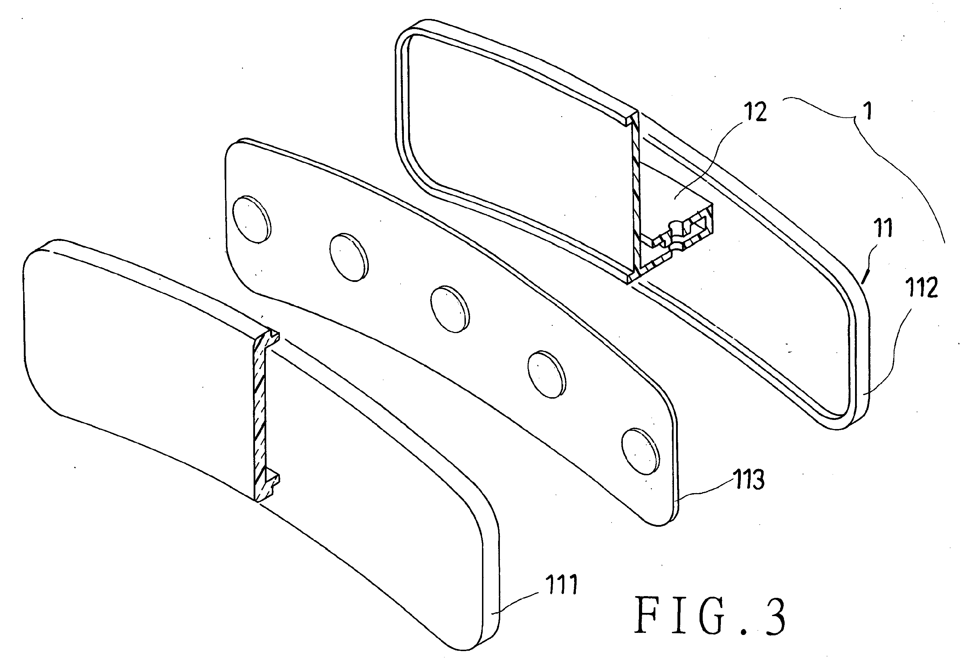

Referring to Figs. 1 to 5, a preferred embodiment of a car lighting and alerting device 1 includes a shining mechanism 11, and a fixing member 12.

The shining mechanism 11 includes a light producing member 113, and a shell housing the light producing member 113; the shell consists of a front cover part 111 and a rear cover part 112 joined together; the front cover part 111 is pervious to light; the rear cover part 112 can be pervious to light or it can be impervious to light.

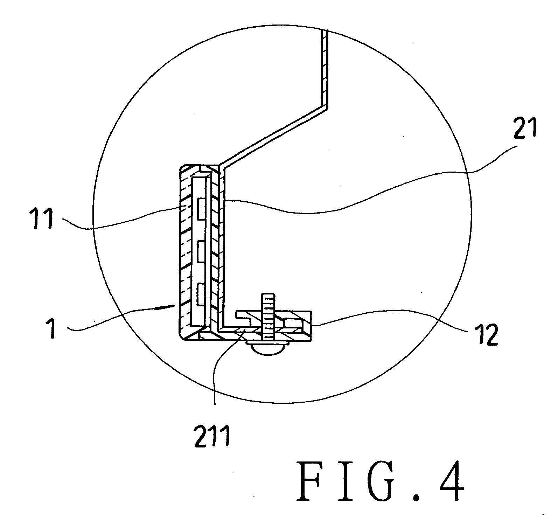

The fixing member 12 is joined to the shining mechanism 11, and secured on a semi-circular edge 21 of a fender of a car 2, which is right above a wheel of the car 2, as shown in Figs. 1 and 4. Referring to Fig. 4, the semicircular edge 21 of the fender has an inner extension portion 211, which projects inwards so as to be substantially perpendicular to the side of the car. And, the fixing member 12 is perpendicular to the rear cover part 112 of the shining mechanism 11, and securely joined to the inner extension portion 211 of the semi-circular edge 21 of the fender by means of proper fixing elements such as screws; thus, there won't be any damage to the main structure of the car 2 resulting from the connection of the fixing member 12 to the fender, and the joint between the fixing member 12 and the fender won't show to spoil the appearance of the whole car 2.

The shining mechanism 11 comes in various shapes, e.g. rectangle, circle, and oval, for satisfying consumer needs. And, the shining mechanism 11 can be circular so as to cover a section of the semi-circular edge 21 of the fender of the car 2.

There are several options when deciding which way the shining mechanism 11 will be activated. For example, electric connection of the light producing member 113 can be such that the light producing member 113 will be activated as soon as the headlights, the minor lights, the brake lights or the blinkers of the car are turned on. The light producing member 113 can start shining steadily or start blinking as soon as the horn of the car 2 is sounded. Or alternatively, the shining mechanism 11 can be electrically connected to a power source so as to shine constantly; in that case, the car 2 will get noticed more easily in the night because most other cars don't have lighting and alerting devices on the left or the right sides.

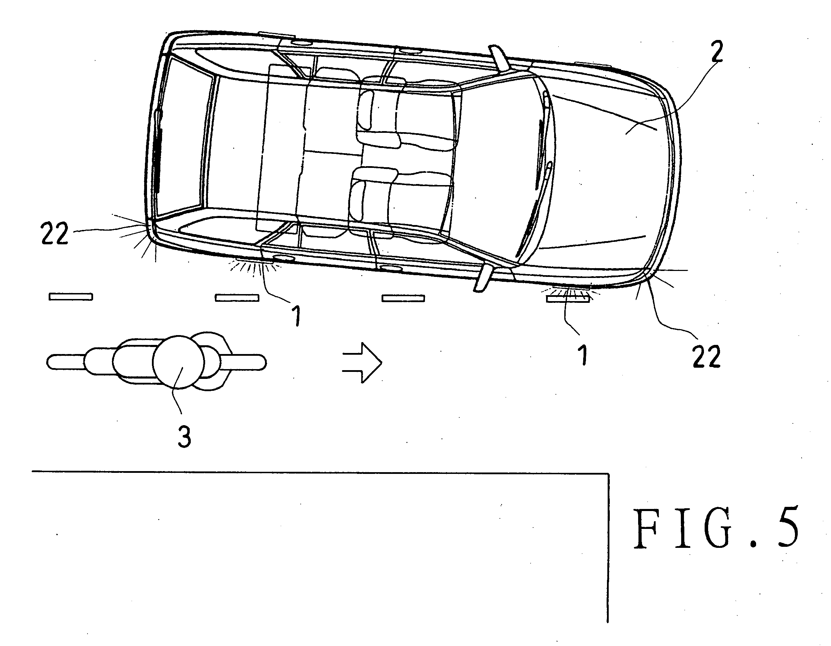

In one of the preferred embodiments of the present invention, the light producing member 113 will start blinking on activation of those of the blinkers 22 that are on the same side of the car 2 as the shining mechanism 11; referring to Fig. 5, when the driver activates the right blinkers before turning right, lighting and alerting devices 1 on the right side of the car 2 will start blinking to inform a motorcycle rider 3 riding along next to the right side of the car 2, thus reducing the risk of accidents. In another preferred embodiment of the present invention, the light producing member 113 will start shining steadily on activation of those of the blinkers 22 that are on the same side of the car 2 as the shining mechanism 11.

From the above description, it can be seen that the car lighting and alerting devices of the present invention has the following advantages:
1. A car, which has the lighting and alerting devices on the semi-circular edges of the fenders thereof, will get noticed more easily when the lighting and alerting devices are activated. Consequently, the risk of accidents will be reduced, especially in the night, storms, and snows.
2. The lighting and alerting devices are joined to inner extension portions of the semicircular edges of the fenders therefore there won't be any damage to the main structure of the car resulting from the connection of the fixing members to the fenders, and the joints between the fixing members and the fenders won't show to spoil the appearance of the car.
3. The lighting and alerting devices have simple structure and are easy to manufacture and assemble, suitable to be used as car standard accessories and suitable to be used as optional accessories as well.

## Claims

1. A car lighting and alerting device, comprising
a shining mechanism; and
a fixing member joined to the shining mechanism, and secured on a semi-circular edge of a fender of a car.

2. The car lighting and alerting device as claimed in claim 1, wherein the shining mechanism is curved.

3. The car lighting and alerting device as claimed in claim 1, wherein the shining mechanism is rectangular.

4. The car lighting and alerting device as claimed in claim 1, wherein the fixing member is joined to an inner portion of the semicircular edge of the car fender.

5. The car lighting and alerting device as claimed in claim 4, wherein the inner portion of the semicircular edge of the car fender is an inward extension portion.

6. The car lighting and alerting device as claimed in claim 1, wherein the shining mechanism will be activated as soon as a brake light of the car is activated.

7. The car lighting and alerting device as claimed in claim 1, wherein the shining mechanism will be activated as soon as a blinker of the car is turned on.

8. The car lighting and alerting device as claimed in claim 1, wherein the shining mechanism includes a front cover part, a rear cover part joined to the front cover part, and a light producing member held in the front and the rear cover parts; at least one of the front and the rear cover parts being pervious to light.

9. A car lighting and alerting device, comprising
a shining mechanism; the shining mechanism including a front cover part, a rear cover part joined to the front cover part, and a light producing member held in the front and the rear cover parts; at least one of the front and the rear cover parts being pervious to light; and
a fixing member joined to the shining mechanism, and secured on an inner portion of a semicircular edge of a fender of a car.

10. The car lighting and alerting device as claimed in claim 9, wherein the shining mechanism is curved.

11. The car lighting and alerting device as claimed in claim 9, wherein the shining mechanism is rectangular.

12. The car lighting and alerting device as claimed in claim 9, wherein the inner portion of the semicircular edge of the car fender is an inward extension portion.

13. The car lighting and alerting device as claimed in claim 9, wherein the shining mechanism will be activated as soon as a brake light of the car is activated.

14. The car lighting and alerting device as claimed in claim 9, wherein the shining mechanism will be activated as soon as a blinker of the car is turned on.
